# FASCICULE DE BREVET EUROPEEN

(11) **EP 2 291 923 B1**
(45) Date de publication et mention de la délivrance du brevet: **02.08.2017**
(21) Numéro de dépôt: 09769337.8
(22) Date de dépôt: 25.06.2009
(51) Int. Cl.: H04B 1/3827, H01Q 9/04, H01Q 1/22, H01Q 1/38, H01Q 5/364

(54) **BLOC FRONTAL AVEC ANTENNE INTÉGRÉE**
EINGANGSBLOCK MIT INTEGRIERTEN ANTENNE
FRONTAL BLOCK WITH INTEGRATED ANTENNA

(30) Priorité: 26.06.2008 FR 0854289
(43) Date de publication de la demande: 09.03.2011
(73) Titulaire: Thomson Licensing DTV, 92130 Issy-les-Moulineaux (FR)
(72) Inventeur: MINARD, Philippe, F-92648 Boulogne cedex (FR); LO HINE TONG, Dominique, F-92648 Boulogne cedex (FR); CHAMBELIN, Philippe, F-92648 Boulogne cedex (FR); NICOLAS, Corinne, F-92648 Boulogne cedex (FR)
(74) Mandataire: Novagraaf Technologies
(86) Numéro de dépôt international: PCT/EP2009/058006
(87) Numéro de publication internationale: WO 2009/156489

(56) Documents cités:
- WO-A-2007/096869
- DE-A1- 4 306 056
- JP-A- 2002 016 630
- US-A1- 2004 239 568

## Description

La présente invention concerne les blocs frontaux intégrés et plus particulièrement l'intégration d'antennes à des modules frontaux intégrés RF.

Cette invention s'inscrit dans le cadre du projet Gigabit Wireless Technology, où un des objectifs est de proposer des solutions de modules frontaux (Front End en langue anglaise) intégrés RF et antennes associées pour les applications mettant en oeuvre les standards WLAN notamment 802.11 bg et 802.11a.

L'utilisation de la technologie dite « système en boitier » (System In Package (SIP) en langue anglaise) permet de diminuer le coût de fabrication de tels modules. Au sein d'un module il sera donc intégré des fonctions du type baluns, filtres, amplificateurs de puissance, amplificateurs faibles bruits, commutateurs, et les réseaux d'adaptation associés à certaines de ces fonctions. Des matériaux à permittivité élevée comme par exemple la céramique utilisée avec un procédé de fabrication particulier appelé LTCC (Low Temperature Cofired Ceramic) sont utilisés. Ils permettent ainsi une réduction de la longueur des connections. Ainsi les antennes associées sont intégrées au plus près de ces modules.

Le document IEEE 2003 vol.150, N°4 août 2003 intitulé « Novel RF front end antenna package » de S.T.R. Song et al. décrit un concept d'intégration de petites antennes dites « antennes patch » sur un substrat semi-conducteur qui supportera de même les circuits de modules frontaux RF.

Le document EP1126522 (Alcatel) « Packaged integrated circuit (PIC) with radio frequency antenna " décrit un bloc comprenant les composants RF inclus dans un module ainsi qu' une antenne RF associée.

Le document WO2004-042868A1 (Integrated circuit package including miniature antenna) propose des antennes juxtaposés à des modules de composants RF et intégrées sur le même substrat que le module lui-même tel représenté par la figure 1. L'ensemble des solutions présentées dans ce document nécessite un évidemment du plan de masse du substrat sur lequel est reporté le module frontal RF de manière à favoriser le rayonnement de l'antenne intégrée au module frontal RF. D'autres exemples de l'état de l'art sont DE 43 06 056 et US 2004/0239568. L'inconvénient majeur de ces solutions est qu'une juxtaposition des fonctions antenne et du module RF n'est pas optimale au vu de l'encombrement. L'utilisation de tels modules intégrés n'a surtout du sens que si la ou les antennes associées sont intégrables au plus près ou au mieux de ces modules.

Mais l'intégration d'antennes aux modules frontaux RF nécessite généralement d'agrandir la taille ou l'épaisseur des modules et pose souvent des problèmes d'encombrement.

En effet, la taille de ces modules frontaux RF destinés aux applications WLAN est inférieure à un carré de 1 cm de coté.

Or pour intégrer des antennes résonnantes à leur mode fondamental à 2.45GHz ou à 5.25GHz, il faut considérer qu'un quart de longueur d'onde représente déjà plus de 3cm ou plus de 1.4cm pour une permittivité diélectrique de la céramique utilisée, donc largement supérieure à la taille du module frontal RF intégré.

De plus, l'usage des standards WLAN 802.11bg et 802.11a conduit à un système de diversité d'ordre 2. Il faut donc pouvoir intégrer au mieux soit deux antennes, pour des diversités spatiales ou de diagrammes, ou éventuellement une antenne mais offrant deux polarisations orthogonales.

L'invention propose donc une nouvelle solution d'intégration d'antennes aux modules frontaux RF qui permet de résoudre les problèmes posés.

L'invention consiste en un bloc frontal de réception RF comprenant un premier substrat S1 et un module frontal intégré RF intégré sur un second substrat S2 supportant une partie rayonnante P2 de l'antenne.

L'antenne est formée de plus par une première partie rayonnante P1 supportée par le substrat S1 et par une jonction constituée par une troisième partie rayonnante P3 reliant la première partie rayonnante P1 et la partie P2 supportée par le substrat S2.

L'invention a l'avantage de minimiser des pertes d'interconnexions entre le module RF en technologie SIP et l'antenne, et l'encombrement de l'ensemble module RF et antenne.

Préférentiellement, la dite première partie rayonnante P1 couvre au moins partiellement la face supérieure du substrat S1.

Selon une variante de l'invention, un quatrième substrat S4 recouvre le substrat S1, le substrat S4 ayant une permittivité plus élevée que le substrat S1.et la dite première partie rayonnante P1 couvre au moins partiellement la face supérieure du substrat S4

Préférentiellement, les composants RF étant implémentés sur la face supérieure du substrat S2, un troisième substrat S3 constitue un capot de protection pour les composants RF du module RF, et la seconde partie rayonnante P2 couvre au moins partiellement la face supérieure du troisième substrat S3.

Selon une variante de l'invention les composants RF du module frontal RF étant implémentés sur la face inférieure du substrat S2, la seconde partie rayonnante P2 couvre au moins partiellement la face supérieure du substrat S2. Préférentiellement le substrat S1 est de type FR4, les substrats S2, S3 et S4 sont de type LTCC.

Préférentiellement la jonction P3 de connexion de la surface P1 et de la surface P2 est une métallisation verticale réalisée sur au moins un des cotés du module RF

Selon une variante de l'invention la métallisation verticale est réalisée par au moins un via.

Selon une variante de l'invention la métallisation verticale est réalisée par lignes de transmission.

Selon une variante de l'invention la jonction P3 de connexion de la surface P1 et de la surface P2 est réalisée par couplage électromagnétique.

Cette solution est applicable à tout type d'antennes nécessitant un plan de masse sous l'élément rayonnant, tel que par exemple les antennes PIFA.

De cette façon, la taille des circuits est limitée et le cout de mise en oeuvre est réduit, car une seule action est nécessaire pour installer modules frontaux et antennes associés.

Les caractéristiques et avantages de l'invention mentionnée ci-dessus, ainsi que d'autres, apparaîtront plus clairement à la lecture de la description suivante, faite en relation avec les dessins joints, dans lesquels :

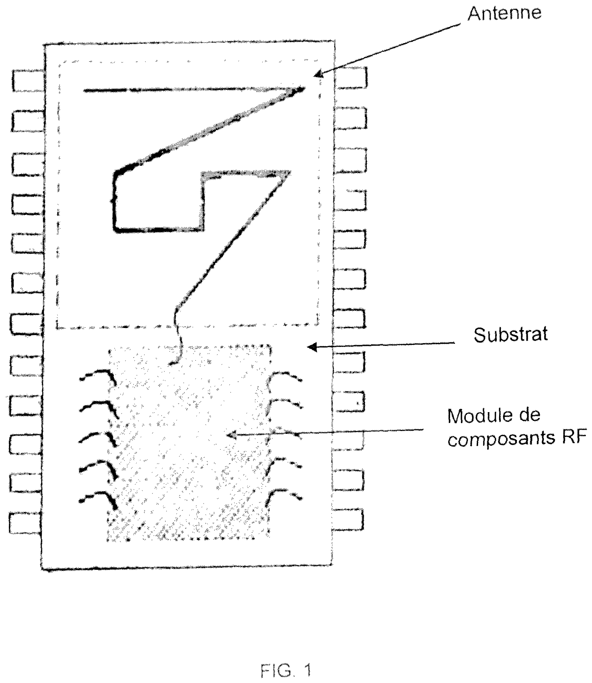

- la figure 1 déjà décrite, est une intégration selon un état de la technique ;
- la figure 2 a et 2b représentent deux différents principes de réalisation d'un bloc frontal intégré selon l'invention ;
- la figure 3 représente une vue en 3 dimensions d'un bloc frontal intégré selon l'invention ;
- la figure 4 représente une vue des 3 partie rayonnantes de l'antenne dans un cas particulier
- la figure 5 représente un bloc frontal intégré selon l'invention ;
- la figure 6a-6c représente des diagrammes correspondant à des résultats de simulation avec un bloc frontal intégré selon l'invention ;
- la figure 7 représente un exemple de réalisation d'un bloc frontal intégré selon l'invention ;
- la figure 8 représente des résultats de simulation avec le bloc frontal intégré selon la figure 7 ;
- la figure 9 représente un exemple de réalisation d'un bloc frontal intégré selon l'invention et comportant un double accés pour une double polarisation ;
- la figure 10 représente un exemple de réalisation d'un bloc frontal intégré selon l'invention pour une réception antenne patch à double bande et à diversité de fréquences.

Pour simplifier la description, les mêmes références seront utilisées dans ces dernières figures pour désigner les éléments remplissant des fonctions identiques. L'idée principale de l'invention est de partager le support de la fonction antenne en 3 parties rayonnantes, une première P1 dont l'emplacement correspond au substrat S1 sur lequel repose le module frontal intégré RF mais non pas au substrat S2, une seconde partie rayonnante P2 qui correspond à celui du substrat S2 support du module frontal intégré RF et une troisième partie rayonnante P3 qui est celle de la jonction entre la première et la seconde partie rayonnante. Ainsi, l'antenne peut être directement alimentée sans ligne d'alimentation supplémentaire par un accès direct au module frontal intégré RF.

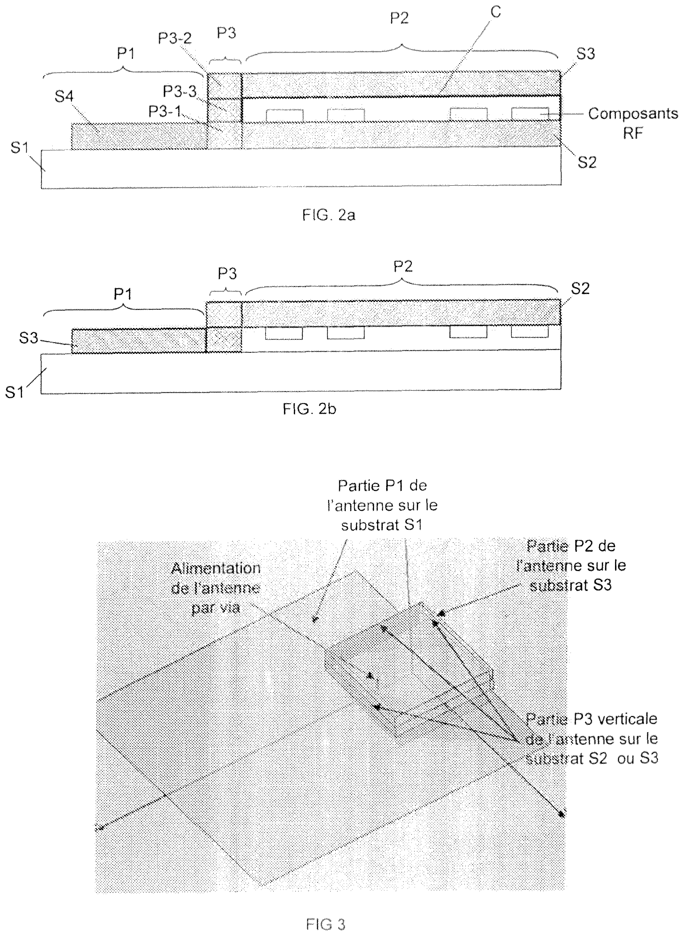

Les figures 2a et 2b décrivent des exemples du principe de réalisation avec une antenne « patch » dont la taille, permettant un fonctionnement à sa première résonance, est supérieure à la taille du module frontal RF.

La figure 2a représente une vue de profil d'un bloc frontal intégré selon l'invention.

Ce bloc est composé par un substrat S1.

Dans un exemple ou une antenne de type « patch » est intégrée, la surface inférieure de ce substrat S1 est recouverte par une couche métallique conductrice et un plan de masse y est gravé.

Pour d'autre antennes et afin d'en assurer le fonctionnement, le plan de masse peut être partiellement gravé.

La surface supérieure du substrat S1 est recouverte par une couche conductrice supportant le module frontal intégré RF dit « module RF » par la suite.

Le module RF est réalisé lui-même par un substrat S2 recouvert par les composants nécessaires aux fonctions RF, par exemple en technologie LTCC, et possède au moins un accès antenne. Alternativement, les composants peuvent être intégrés au substrat.

Différentes variantes de l'invention, dépendantes du module RF vont être ainsi décrites :
Suivant une première variante, les composants du module RF sont extérieurs au substrat S2 et ces composants se trouvent alors sur la partie supérieure du substrat S2. Ils ne font pas face au substrat S1. La figure 2a montre le substrat S3 jouant le rôle de capot de protection permettant de protéger les composants extérieurs au substrat S2. Ce substrat S3 constituant le capot est utilisé pour la fonction antenne. Le substrat S3 ou S2 peut être réalisé de manière à former une cavité à l'aide des parties rayonnantes P3-2 et P3-3 pour maintenir le substrat S3 à une hauteur nécessaire du substrat S2, en rapport avec la hauteur des composants extérieurs du module RF.

Sur la face supérieure du substrat S1 non recouverte par le substrat S2 la première partie rayonnante P1 de l'antenne est gravée.

Le substrat S1 peut également, totalement ou partiellement, supporter un substrat S4, de permittivité supérieure telle par exemple un substrat LTCC, sur ou dans lequel la première partie rayonnante de l'antenne est gravée.

Comme les substrats S1, S2, S3 et S4 peuvent être des substrats multicouches, il est alors possible de gravé des couches de métal entre les couches de substrats constituant le substrat multicouches.

La taille du substrat S2 du module RF est éventuellement plus grande que la taille de la partie rayonnante propre aux fonctions RF. Cette partie du substrat S2 non utilisée par la partie propre aux fonctions du module RF est par la suite éventuellement utilisée de la même manière pour la fonction antenne. C'est-à-dire que cette partie du substrat S2 peut être soit gravée directement, soit supporter un substrat S4, de permittivité supérieure telle par exemple un substrat LTCC, sur ou dans lequel une partie de l'antenne est gravée.

La fonction antenne est réalisée par exemple dans le même matériau que le module frontal lui-même. Cela permet en un seul procédé de fabrication de réaliser ce bloc frontal RF avec au moins une partie de la fonction antenne. En fonction du degré d'intégration souhaité liée à la diminution de la longueur d'ondes, le substrat S4 est optionnel.

La troisième partie rayonnante P3 de cette antenne, en position verticale, est une partie de jonction entre la première P1 et la seconde partie P2 de l'antenne. Elle se situe à la fois sur/dans le substrat S2 et sur/dans la zone P3-1 non utilisée par les fonctions RF du substrat S2. Dans cet exemple, cette rayonnante verticale P3 permet de relier électriquement par contact direct les parties rayonnantes P1 et P2 de l'antenne. La P3-1, jonction entre les parties rayonnantes P1 et P2 est une du substrat S2 ou S4, De même la partie rayonnante P3-2 est une partie du substrat S3 La partie rayonnante P3-3 est une pure partie rayonnante de jonction verticale entre les 2 premières parties P3-1 et P3-2. Cette jonction verticale peut également être réalisée par exemple par métallisation à l'aide d'un ou plusieurs vias.

Une autre méthode consisterait à relier électro-magnétiquement les parties rayonnantes P1 et P2 en utilisant un couplage électromagnétique entre deux lignes couplées ou tout autre système permettant un couplage électromagnétique. Une autre méthode consisterait à utiliser par exemple des lignes coplanaires, de lignes microrubans ou de lignes conductrices pour la jonction de ces 2 parties. Ces lignes forment alors une nappe flexible de liaison.

Dans un cas préférentiel, l'antenne peut donc être gravée uniformément sur un même substrat constitué de S3 et de S4 recouvrant totalement ou partiellement les substrats S1 et S2, ainsi que la jonction entre ces 2 substrats. En fonction du degré d'intégration souhaité liée à la diminution de la longueur d'ondes, le substrat S4 est optionnel.

Suivant une deuxième variante de l'invention représentée par la figure 2b, les composants du module frontal intégré RF extérieurs au substrat S2 et font face au substrat S1, les composants se trouvent alors sur la partie inférieure du substrat S2. Le substrat S2 est réalisé de manière à former une cavité permettant au substrat S2 d'être à une distance nécessaire du substrat S1.

La partie supérieure du substrat S2 peut alors supporter un plan de masse sur lequel la deuxième partie rayonnante P2 de l'antenne sera gravée.

Une troisième partie rayonnante P3 conductrice, en position verticale peut être réalisée comme précédemment décrite.

La fonction antenne est réalisée préférentiellement dans le même matériau que le module frontal lui-même, par exemple de type LTCC. Cela permet en un seul procédé de fabrication de réaliser ce bloc frontal intégré avec au moins une partie rayonnante de la fonction antenne si nécessaire.

Plusieurs moyens peuvent être mis en oeuvre pour transmettre le signal RF entre le module frontal RF et l'antenne comme par exemple :
1- par un ou plusieurs vias,
2- par une ligne de transmission de type microruban (microstrip), triplaque (stripline), coplanaire (coplanar), coplanaire avec plan de masse (coplanar grounded),
3- par un couplage électromagnétique, par exemple de type fente.

Afin de faciliter l'intégration de l'antenne associée au module frontal RF, des antennes planaires seront préférentiellement utilisées comme par exemple des antennes « patch », des antennes « PIFA (printed inverted F antenna) », fentes. La figure 3 représente une vue en 3 dimensions suivant les axes X, Y et Z d'un bloc frontal intégré.

Elle décrit un exemple une antenne « patch » dont la taille, permettant un fonctionnement à sa première résonance, est supérieure à la taille du module frontal RF. Une première partie de la métallisation de l'antenne patch se situe sur le substrat S1 lui-même. Une seconde partie conductrice de l'antenne patch se situe sur le substrat S3 recouvrant le module RF. Une troisième partie conductrice, en position verticale, se situe à la fois sur/dans le substrat S3 et sur/dans la zone non utilisée par les fonctions RF du substrat S2. Dans cet exemple, cette partie rayonnante verticale permet de relier électriquement par contact direct les partie rayonnantes P1 et P2 de l'antenne « patch ». Cette métallisation verticale peut être réalisée par exemple à l'aide d'un ou plusieurs vias.

La position du point d'alimentation d'antenne permet un fonctionnement à sa fréquence de résonance.

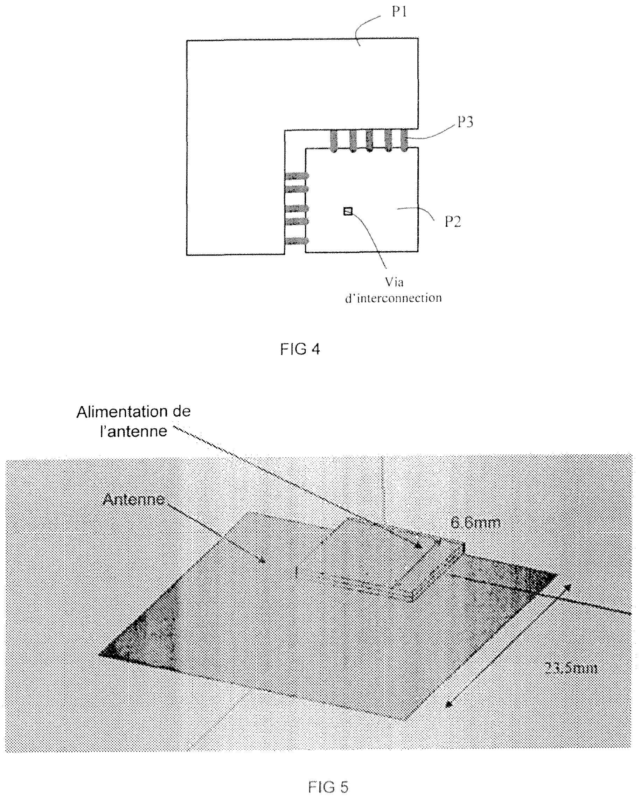

La position de l'antenne par rapport au module RF (substrat S2) est fonction :
- du point d'alimentation dit aussi point d'excitation de l'antenne,
- de la position relative de l'accès antenne en sortie du module frontal RF,
- du nombre de sortie du module frontal RF. Préférentiellement, et pour faciliter le routage des cartes intégrant un ou des modules RF, l'antenne ne recouvrira pas les côtés du module ayant des accès utilisés. En Figure 4 un exemple d'antenne « patch » est représenté dont uniquement deux cotés sont connectés entre les deux partie rayonnantes P1 et P2 de l'antenne.

Cependant, des configurations peuvent avoir lieu où il doit être fait un compromis entre la position de l'antenne et du module RF et celle, notamment de l'excitation de l'antenne. En effet la topologie de l'antenne peut nécessiter des connexions sur plusieurs coté du module frontal RF, entre la seconde partie rayonnante P2 de l'antenne (aux dimensions maximale du module frontal intégré RF) et la première partie rayonnante P1 de l'antenne sur le substrat S1. Donc si les interconnexions, entre l'antenne et le module RF d'une part, entre le module RF et le substrat S1 d'autre part, se situent sur le même coté du module RF, les interconnexions entre le module RF et le substrat S1 doivent être routées sur une autre couche à l'aide de vias ou trous métallisés.

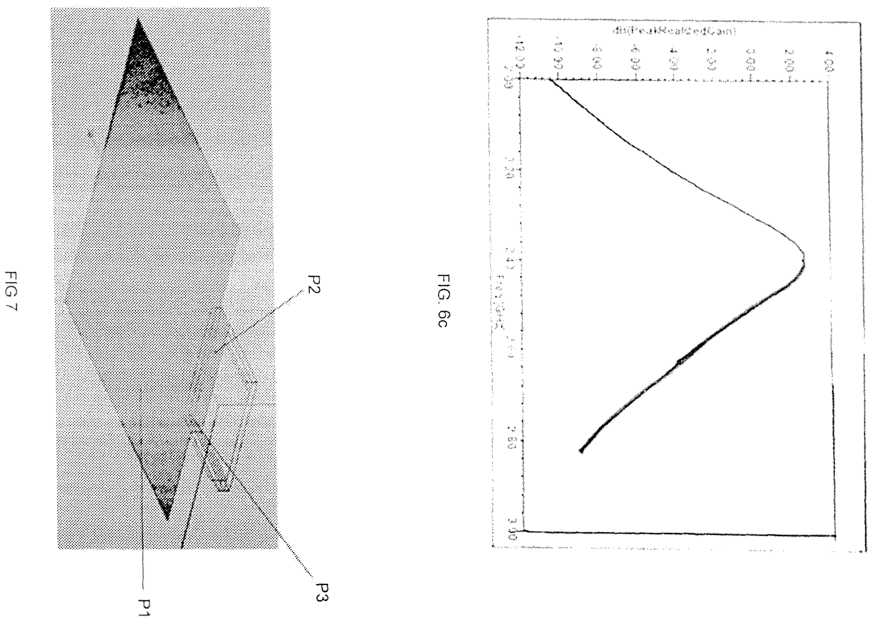

Des réalisations particulières correspondant aux figures 5 et 7 sont ensuite décrites.

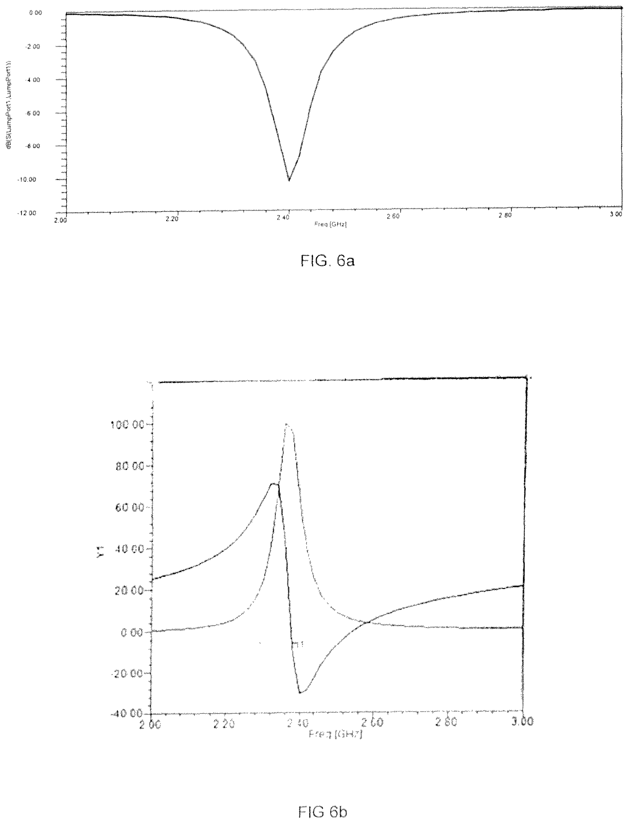

La figure 5 présente une antenne « patch » intégrant un boitier représentant un module frontal intégré RF. Selon le descriptif de l'invention une partie rayonnante de l'antenne patch P1 est située sur un substrat S1 de type FR4 (permittivité = 4.4, Tangente de pertes = 0.022, épaisseur du substrat = 1.4mm). La seconde partie rayonnante de l'antenne P2 est reportée sur un substrat S3 de type LTCC (permittivité = 9.4, Tangente de pertes = 0.0014, épaisseur du substrat = 0.65mm). Le côté de l'antenne « patch » carré de 23.5mm est placé sur un plan de masse carré de 75mm de côté. Une alimentation par vias est située sur l'axe médian à 6.6mm du bord. Les résultats de simulation sont présentés en figures 6a, 6b et 6c. En Figure 6a, la courbe montre l'adaptation de l'antenne à la fréquence de 2.4GHz. En Figure 6b, cette courbe montre la résonance (lm(Z)=0) de l'antenne aux environs de 2.4GHz. La Figure 6c présente la réponse en fréquence du gain de l'antenne et le diagramme associé à 2.4GHz. Pour une même fréquence de résonance la taille de l'antenne est diminuée de 25% par l'utilisation de matériaux du type LTCC avec une permittivité plus élevée que celle du FR4.

Les résultats en rayonnement sont équivalents à la réponse sans le module RF à 0.5dB près.

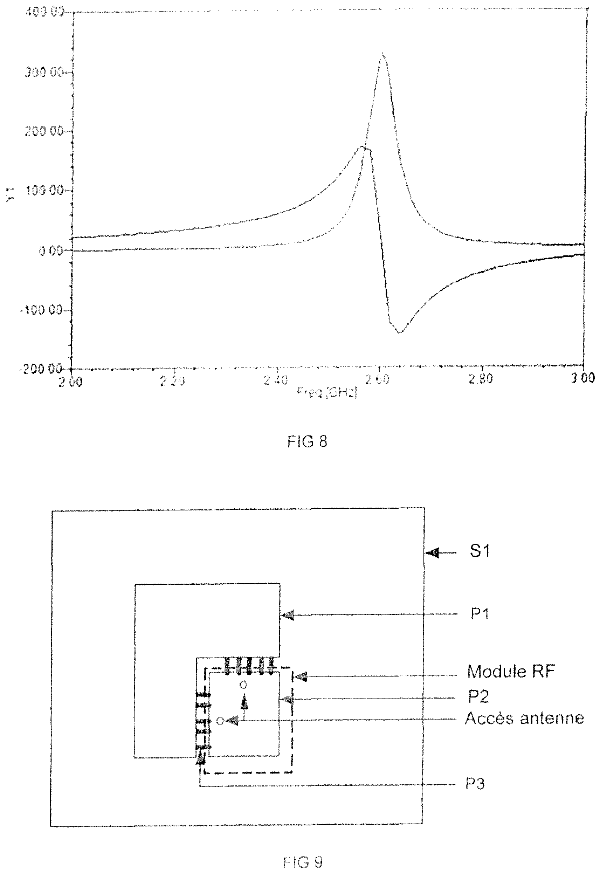

La figure 7 décrit une antenne composée partiellement sur le module RF avec une alimentation de l'antenne « patch » intégrée au module RF intégré. Les paramètres de simulation sont ceux de la précédente simulation. La figure 8 montre un décalage de la fréquence de résonance à 2.6GHz car la permittivité effective du patch est plus faible que lorsque le module frontal RF était quasiment inséré sous le patch.

Différentes variantes de l'invention sont envisagées :
En effet, des profils d'antennes patch, PIFA, double ou multi bandes peuvent être appliqués à cette solution d'intégration. Pour cette variante, des connections multiples entre les accès antennes aux différentes fréquences et le circuit RF du substrat S2 sont réalisées.

Il est également possible de réaliser une diversité d'antenne. Plusieurs antennes seront donc gravées sur les parties libres des substrats S1 ou S2 ou sur le substrat S3.

Il est également possible de réaliser une diversité de polarisation en insérant une seconde polarisation dans le cas d'une antenne « patch ». Un double accès antenne permet d'appliquer 2 excitations orthogonales. La figure 9 représente une vue de dessus schématique d'une solution à diversité avec une antenne « patch ». Sur le substrat S1 et S3 avec plan de masse apte à la gravure de l'antenne, on distingue la première partie rayonnante P1 et la seconde partie rayonnante P2 de l'antenne. La troisième partie rayonnante d'interconnexion est représentée comme exemple par des lignes de connexion. La taille du module RF est représentée comme supérieure à celle de la deuxième partie rayonnante de l'antenne.

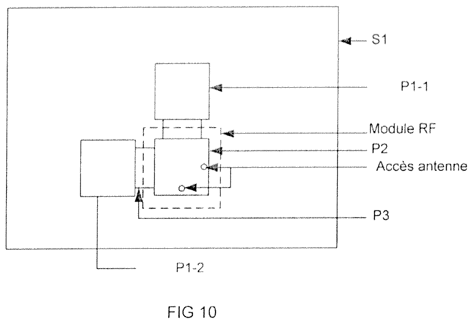

La figure 10 décrit une vue de dessus schématique d'une solution à double bande et à diversité de polarisation avec une antenne patch. La partie rayonnante P2 de l'antenne forme une partie rayonnante de l'antenne à la fréquence la plus haute, par exemple 5GHz, et la partie rayonnante P1-1 forme une autre partie rayonnante de l'antenne à la fréquence la plus haute alors que la partie rayonnante P1-2 forme la partie rayonnante de l'antenne à la fréquence la plus basse.

## Revendications

1. Bloc frontal de réception RF comprenant:
- un premier substrat (S1) comprenant une face inférieure et une face supérieure, ladite face inférieure étant munie d'un plan de masse,
- un second substrat (S2) comprenant une face inférieure et une face supérieure,
- un module frontal intégré RF intégré sur ledit second substrat (S2), ledit module comprenant au moins un composant RF, et
- une antenne, **caractérisé en ce que** le second substrat (S2) est disposé au-dessus du premier substrat de sorte à recouvrir au moins partiellement ledit premier substrat (S1) et l'antenne est formée par
• une première partie rayonnante (P1) supportée par le premier substrat (S1),
• une seconde partie rayonnante (P2) supportée par le second substrat (S2),
• et une troisième partie rayonnante (P3) reliant la première partie rayonnante (P1) et la seconde partie rayonnante (P2).

2. Bloc frontal de réception RF selon la revendication 1, **caractérisé en ce que** ladite première partie rayonnante (P1) couvre au moins partiellement la face supérieure du premier substrat (S1).

3. Bloc frontal de réception RF selon la revendication 1, **caractérisé en ce qu'**il comporte en outre un troisième substrat (S4) ayant une permittivité plus élevée que le premier substrat (S1) et comportant une face inférieure et une face supérieure, **en ce que** ledit troisième substrat (S4) recouvre le premier substrat S1 sur une portion non recouverte par le second substrat (S2), et **en ce que** ladite première partie rayonnante (P1) couvre au moins partiellement la face supérieure du troisième substrat (S4).

4. Bloc frontal de réception RF selon l'une des revendications 1 à 3, **caractérisé en ce qu'**il comporte en outre un quatrième substrat (S3), **en ce que**, ledit au moins un composant RF du module RF étant monté sur la face supérieure du second substrat (S2), ledit quatrième substrat (S3) forme un capot de protection couvrant ledit au moins un composant RF du module RF, et **en ce que** la seconde partie rayonnante (P2) couvre au moins partiellement la face supérieure du quatrième substrat (S3).

5. Bloc frontal de réception RF selon l'une des revendications 1 à 3 **caractérisé en ce que** ledit au moins un composant RF du module RF étant monté sur la face inférieure du second substrat (S2) face au premier substrat (S1), la seconde partie rayonnante (P2) couvre au moins partiellement la face supérieure du second substrat (S2).

6. Bloc frontal de réception RF selon l'une des revendications 1 à 5 **caractérisé en ce que** le premier substrat (S1) est de type FR4, les second, troisième et quatrième substrats (S2, S4, S3) étant de type L TCC.

7. Blocfrontal de réception RF selon la revendication 1, **caractérisé en ce que** la troisième partie rayonnante (P3) connectant la première partie rayonnante (P1) et la seconde partie rayonnante (P2) est une métallisation verticale réalisée sur au moins un des cotés du module RF.

8. Bloc frontal de réception RF selon la revendication 7, **caractérisé en ce que** la métallisation verticale est réalisée sur au moins un des cotés du module RF par au moins un via.

9. Bloc frontal de réception RF selon la revendication 7, **caractérisé en ce que** la métallisation verticale est réalisée par lignes de transmission.

10. Bloc frontal de réception RF selon la revendication 1, **caractérisé en ce que** la troisième partie rayonnante (P3) connectant la première partie rayonnante (P1) et la seconde partie rayonnante (P2) est réalisée par couplage électromagnétique.

## Patentansprüche

1. Frontaler RF-Eingangsblock, umfassend:
- ein erstes Substrat (S1), das eine untere Fläche und eine obere Fläche umfasst, wobei die untere Fläche mit einer Masseebene versehen ist,
- ein zweites Substrat (S2), das eine untere und eine obere Fläche umfasst,
- ein RF-integriertes Frontmodul, integriert auf dem besagten zweiten Substrat (S2), wobei dieses Modul mindestens eine RF-Komponente umfasst, und
- eine Antenne, dadurch charakterisiert, dass das zweite Substrat (S2) über dem ersten Substrat angeordnet ist, dergestalt, dass es das besagte erste Substrat (S1) mindestens teilweise bedeckt, und die Antenne gebildet wird aus
• einem ersten abstrahlenden Teil (P1), der durch das erste Substrat (S1) getragen wird,
• einem zweiten abstrahlenden Teil (P2), der durch das zweite Substrat (S2) getragen wird,
• und einem dritten abstrahlenden Teil (P3), der den ersten abstrahlenden Teil (P1) und den zweiten abstrahlenden Teil (P2) verbindet.

2. Frontaler RF-Eingangsblock nach Anspruch 1, **dadurch gekennzeichnet, dass** der besagte erste abstrahlende Teil (P1) mindestens teilweise die obere Fläche des ersten Substrats (S1) bedeckt.

3. Frontaler RF-Eingangsblock nach Anspruch 1, **dadurch gekennzeichnet, dass** er außerdem ein drittes Substrat (S4) umfasst, das eine höhere Primitivität als das erste Substrat (S1) hat und eine untere Fläche und eine obere Fläche umfasst, dadurch, dass das besagte dritte Substrat (S4) einen Abschnitt des ersten Substrats S1 überdeckt, der nicht durch das zweite Substrat (S2) überdeckt wird, und dadurch, dass der erste abstrahlende Teil (P1) mindestens teilweise die oberen Fläche des dritten Substrats (S4) bedeckt.

4. Frontaler RF-Eingangsblock nach einem der Ansprüche 1 bis 3, **dadurch gekennzeichnet, dass** er außerdem ein viertes Substrat (S3) umfasst, dadurch, wobei die besagte mindestens eine RF-Komponente des RF-Moduls auf der oberen Fläche des zweiten Substrats (S2) angebracht ist, dass das besagte vierte Substrat (S3) eine Schutzabdeckung bildet, die die besagte mindestens eine RF-Komponente des RF-Moduls bedeckt, und dadurch, dass der zweite abstrahlende Teil (P2) mindestens teilweise die obere Fläche des viertens Substrats (S3) bedeckt.

5. Frontaler RF-Eingangsblock nach einem der Ansprüche 1 bis 3, **dadurch gekennzeichnet**, wobei die besagte mindestens eine RF-Komponente des RF-Moduls auf der oberen Fläche des zweiten Substrats (S2) gegenüber dem ersten Substrat (S1) angebracht ist, dass der zweite abstrahlende Teil (P2) mindestens teilweise die obere Fläche des zweiten Substrats (S2) bedeckt.

6. Frontaler RF-Eingangsblock nach einem der Ansprüche 1 bis 5, **dadurch gekennzeichnet, dass** das erste Substrat (S1) vom Typ FR4 ist, und das zweite, dritte und vierte Substrat (S2, S4, S3) vom Typ L TCC sind.

7. Frontaler RF-Eingangsblock nach Anspruch 1, **dadurch gekennzeichnet, dass** der dritte abstrahlende Teil (P3), der den ersten abstrahlenden Teil (P1) und den zweiten abstrahlenden Teil (P2) verbindet, eine vertikale Metallisierung ist, die mindestens auf einer der Seiten des RF-Moduls erfolgt.

8. Frontaler RF-Eingangsblock nach Anspruch 7, **dadurch gekennzeichnet, dass** die vertikale Metallisierung mindestens auf einer der Seiten des RF-Moduls durch mindestens ein Via erfolgt.

9. Frontaler RF-Eingangsblock nach Anspruch 7, **dadurch gekennzeichnet, dass** die vertikale Metallisierung durch Übertragungsleitungen erfolgt.

10. Frontaler RF-Eingangsblock nach Anspruch 1, **dadurch gekennzeichnet, dass** der dritte abstrahlende Teil (P3), der den ersten abstrahlenden Teil (P1) und den zweiten abstrahlenden Teil (P2) verbindet, durch elektromagnetische Kopplung erfolgt.

## Claims

1. RF reception front end block comprising:
- a first substrate (S1) comprising a lower side and an upper side, said lower side being equipped with a ground plane,
- a second substrate (S2) comprising a lower side and an upper side,
- an RF integrated front end module integrated onto said second substrate (S2), said module comprising at least one RF component, and
- an antenna, **characterised in that** the second substrate (S2) is disposed above the first substrate so as to cover at least partially said first substrate (S1) and the antenna is formed by
• a first radiating part (P1) supported by the first substrate (S1),
• a second radiating part (P2) supported by the second substrate (S2),
• and a third radiating part (P3) connecting the first radiating part (P1) and the second radiating part (P2).

2. RF reception front end block according to claim 1, **characterised in that** said first radiating part (P1) covers at least partially the upper side of the first substrate (S1).

3. RF reception front end block according to claim 1, **characterised in that** it further comprises a third substrate (S4) having a higher permittivity than the first substrate (S1) and comprising a lower side and an upper side, **in that** said third substrate (S4) covers the first substrate (S1) on a portion not covered by the second substrate (S2), and **in that** said first radiating part (P1) covers at least partially the upper side of the third substrate (S4).

4. RF reception front end block according to one of claims 1 to 3, **characterised in that** it further comprises a fourth substrate (S3), **in that**, said at least one RF component of the RF module being mounted on the upper side of the second substrate (S2), said fourth substrate (S3) forms a protective cover covering said at least one RF component of the RF module, and **in that** the second radiating part (P2) covers at least partially the upper side of the fourth substrate (S3).

5. RF reception front end block according to one of claims 1 to 3 **characterised in that** said at least one RF component of the RF module being mounted on the lower side of the second substrate (S2) opposite the first substrate (S1), the second radiating part (P2) covers at least partially the upper side of the second substrate (S2).

6. RF reception front end block according to one of claims 1 to 5 **characterised in that** the first substrate (S1) is of type FR4, the second, third and fourth substrates (S2, S3, S4) being of type LTCC.

7. RF reception front end block according to claim 1, **characterised in that** the third radiating part (P3) connecting the first radiating part (P1) and the second radiating part (P2) is a vertical metallisation implemented on at least one side of the RF module.

8. RF reception front end block according to claim 7, **characterised in that** the vertical metallisation is implemented on at least one side of the RF module by at least one via.

9. RF reception front end module according to claim 7, **characterised in that** the vertical metallisation is implemented by transmission lines.

10. RF reception front end block according to claim 1, **characterised in that** the third radiating part (P3) connecting the first radiating part (P1) and the second radiating part (P2) is implemented by electromagnetic coupling.
